# EUROPEAN PATENT APPLICATION

(11) **EP 1 398 579 A1**
(43) Date of publication of application: **17.03.2004**
(21) Application number: 02425549.9
(22) Date of filing: 05.09.2002
(51) Int. Cl.: F24H 1/28

(54) **Condensation boiler with a high modulation ratio**

(71) Applicant: Thermital Spa, 31040 Volpago del Montello (TV) (IT)
(72) Inventor: Peruzzi, Francesco, 35141 Padova (IT); Stella, Silvio Rudy, 36061 Bassano del Grappa (VI) (IT)
(74) Representative: Bonini, Ercole

(57) **Abstract**

A condensation boiler is disclosed comprising:
- a cylindrical combustion chamber (2) into which the head of at least a burner is inserted, the walls (21) of said combustion chamber being in contact with water to be heated;
- a plurality of flue gas tubes (4) adapted to convey the combustion gases to a gas outlet chimney (6);
- one or more water jackets (8) defined between said combustion chamber, said flue gas tubes and the outer surface of said boiler;
- a condensate collection chamber (5) arranged between said flue gas tubes (4) and said flue gas outlet chimney (6), wherein the ratio between the inner diameter (D) of said combustion chamber (2) and the diameter (d) of said combustion head (31) is greater than or equal to 3.7.

## Description

The invention relates to a hot water heating boiler preferably but not exclusively for heating dwelling houses.

The so-called condensation boilers have been known since a long time and are generally fed by methane gas. It is well known that the combustion reaction of methane gas produces carbon dioxide CO2 and water. Therefore water in the form of steam is a component of the flue gases.

Condensation boilers are so constructed that flue gases lick relatively cold boiler surfaces so that water steam gives off its latent condensation heat and transfers it to the tube nest licked by water to be heated. In this way transfer of latent heat of water steam occurs from flue gases to the mass of water to be heated.

In this way boiler efficiency and output is increased.

Analysis of operation cycles of boilers for heating systems during winter periods and in connection with the corresponding months, led to establish that the boilers as an average do not use their maximum power, but supply to the system powers that may vary as an average from 60% down to 20% during less cold periods.

In order to gain effectiveness increasing the boiler efficiency, it was found that it is essential to modulate the boiler power so that it supplies only the power required according to the seasonal or daily trend.

To give an example, if a boiler has a maximum power of 35,000 calories and the trend of the outer temperature requires a supply of calories/hour to the rooms equal to 30% of the maximum installed power, that is about 10,000 calories/hour, in order to keep a high efficiency of the boiler unit, it is important to attain an ability of adjustment of the boiler and consequently of the burner associated to the boiler, so that the unit may deliver only the required power and not a higher power, this keeping always a high overall efficiency.

This adjustment of the heating unit comprising boiler and burner, to operate under good conditions at the required even lower power, or to carry out a passage from low power to high power, requires an optimal behavior of the burner that is not only implemented by the variation of the delivered quantity of kilocalories, but provides also for an optimal development of the flame emitted by the burner. Such an optimal behavior was found to be dependent, in addition to the features of adaptability of the burner to the various required powers, on the geometry of the boiler combustion chamber as well.

Further features contribute to optimize the efficiency of a condensation boiler, such as use of suitable materials to avoid boiler degradation, as well as particular expedients for the boiler operation.

A not negligible contribution to improve the efficiency is also due to special physical characteristics of the boiler. Indeed it was found that its efficiency and more particularly the condensation ability increases if one delivery and two separate returns are provided, the one for water at intermediate temperature and the other for water at lower temperature. This expedient enhances creation of cold zones in the bundle of flue gas tubes and in this way the condensation phenomenon and therefore heat exchange and recovery of latent heat of evaporation of water steam contained in flue gases are enhanced.

The object of the present invention therefore is to provide a condensation boiler adapted to maximize the efficiency with best heat recovery by modulating the supplied power to that actually required during the boiler operation cycle.

For this reason an object of the invention is to provide a boiler with high modulation ratios, the term modulation ratio meaning the ratio between the maximum power supplied by the boiler and the minimum power that the boiler can supply with a correct operation.

Another object of the invention is to provide a boiler with an optimal combustion so that the flue gases are almost free of toxic residues minimizing formation of NOx.

A further object of the invention is to provide a burner associated to the boiler, also supplying variable powers by keeping an optimal air-gas mixture.

Another object is to design the boiler in such a way that the flame emitted by the burner is in optimal condition independently from the power supplied by the burner.

The foregoing objects and others that will be better understood hereinafter are attained by a condensation boiler comprising:
- a combustion chamber into which the head of at least a burner is inserted, the walls of said combustion chamber being in contact with water to be heated;
- a plurality of flue gas tubes adapted to convey the combustion gases to a flue gas outlet chimney;
- one or more water jackets defined between said combustion chamber, said flue gas tubes and the outer surfaces of said boiler;
- a condensate collection chamber arranged between said flue gas tubes and said gas outlet chimney, said boiler being characterized in that the ratio between the minimum size of said combustion chamber and the diameter of said combustion head is greater than or equal to 3.7.

In case said combustion chamber is generally cylindrical, the 3.7 ratio will be measured between the inner diameter of the combustion chamber and the diameter of the combustion head.

The importance to obtain the above indicated ratio is caused by the fact that when the power supplied by the burner increases, the flame at the burner head tends to detach and move away from said head.

If the combustion chamber is narrow the flame licks the surface of the combustion chamber and for this reason the flame tends to cool quickly.

The consequence is that the quality of combustion tends to decay and unburnt gases are generated, worsening the quality of the flue gases and in any case affecting the overall efficiency of the boiler.

Another reason according to which it is important that the flame does not touch the surface of the combustion chamber is that this leads to a rather quick deterioration of said combustion chamber.

Consequently it is important that the combustion chamber is so measured as to resist increasing flame volumes without the chamber being directly hit by the flame.

Another important feature of the boiler of the invention is that the boiler has a delivery fitting for water at the maximum required temperature and two return fittings, one at intermediate temperature and another at a lower temperature. The intermediate temperature return fitting is connected to the circuit of heating elements at higher temperature, while the lower temperature return fitting is connected to the circuit of heating elements at a lower temperature relative to the first heating elements.

The two different returns carry out a colder zone located in the lowest part of the boiler where the flue gas tubes are arranged and the condensation phenomenon occurs with the highest intensity, allowing exchange and recovery of the latent heat from steam of the flue gases.

Further features and characteristics of the invention will be better understood from the following description of a preferred embodiment given as an illustrative but non limiting example and shown in the accompanying sheets of drawing in which:
- Fig. 1 is a schematic sectional view of the boiler of the invention;
- Fig. 2 shows the boiler of the invention associated to a hydraulic system with one delivery and two returns;
- Fig. 3 shows the boiler of the invention associated to an hydraulic circuit having a variable speed circulation pump; and
- Fig. 4 is a partial cross sectional view of the boiler of the invention with the burner and the combustion chamber.

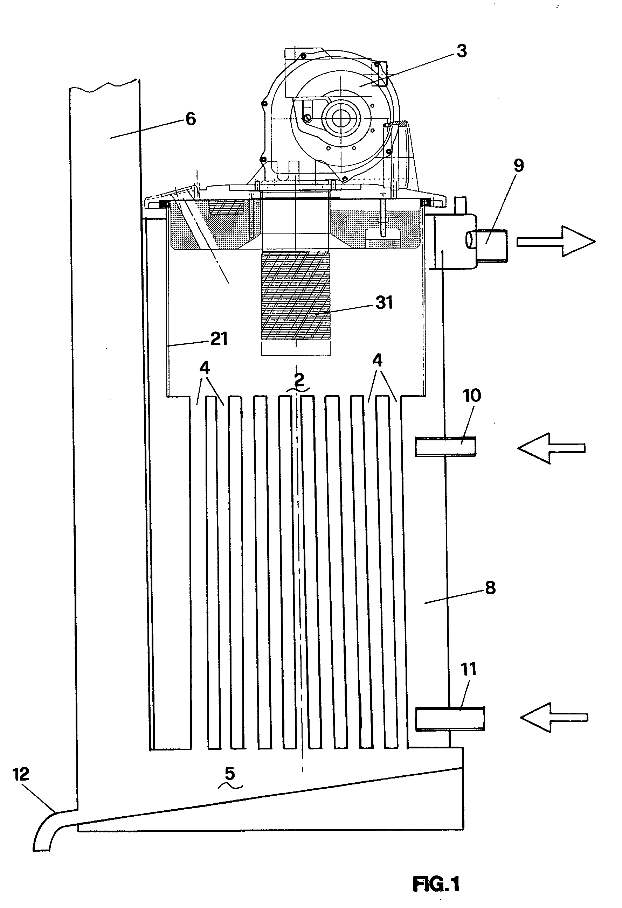

With reference now to the cited figures one can see that the boiler of the invention generally indicated with 1 in fig. 1, has a generally cylindrical combustion chamber 2 with vertical axis in which the head of a burner 3 is protruding. A plurality of flue gas tubes 4 are arranged below the combustion chamber and reach a condensate collection chamber 5 whose extension is a chimney 6 vertically arranged for the flue gas outlet.

The external surface 7 of the boiler together with the inner surface or wall 21 of the combustion chamber and the surfaces 41 of the flue gas tube 4, create a water jacket 8 provided with an upper delivery fitting 9 and two return fittings 10 and 11 respectively.

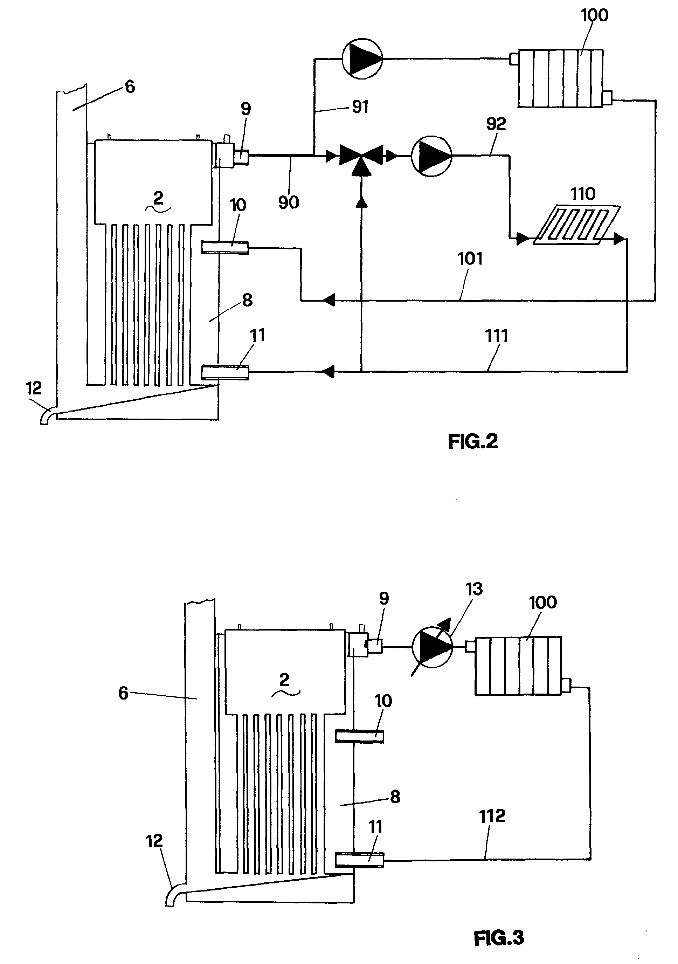

As one can see from the scheme of fig. 2, a plurality of radiating elements 100, (of which only one is shown in fig. 2), are connected to the delivery pipe 91 connected to the delivery fitting 9 and to a return pipe 101 connected to a first return fitting 10.

Further radiating elements indicated with 110, are connected to a delivery pipe 92 branched from the delivery pipe 90 and to a return pipe 111 connected to the second return fitting 11.

If for instance the water delivery temperature at the fitting 9 is 70°C, the return water temperature at the first return fitting 10 may be 60°C while at the second return fitting 11 it will be 30°C.

In this way it is clear that the lower portion of the flue gas tubes 4 has a lower temperature relatively to the upper portion as the lower portion is touched by water having a much lower temperature.

Therefore in the lower zone of the flue gas tubes a cold zone is provided, making easier condensation of water steam being the residue of the methane combustion passing together with C02 through the tube nest 4.

Condensing water is collected in the condensate collection chamber 5 and is then suitably discharged through the discharge pipe 12 while the flue gases go out through the chimney 6.

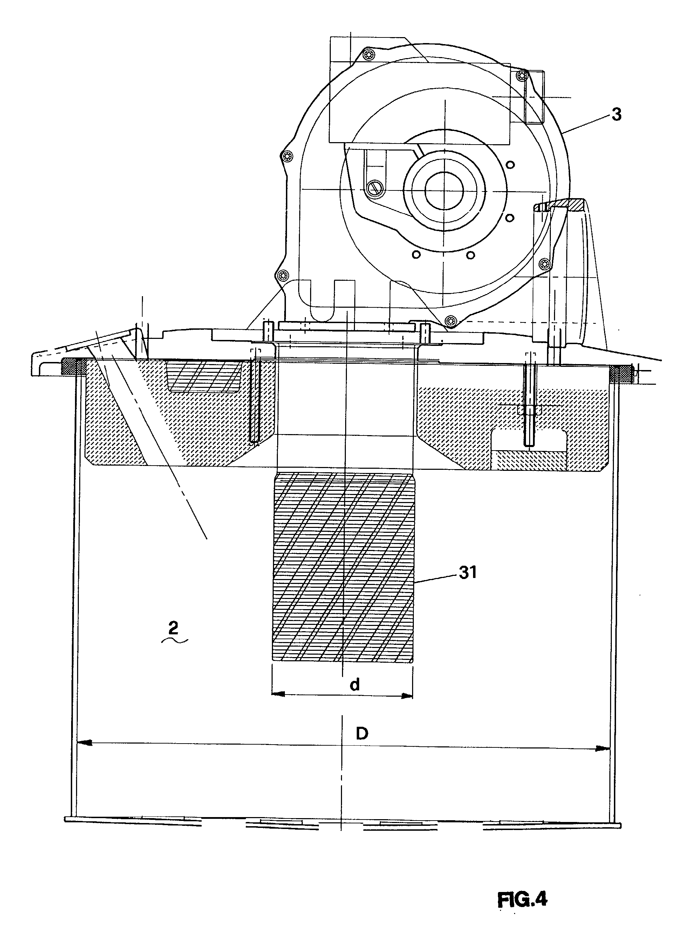

As to the combustion chamber 2 and referring both to fig. 1 and fig. 4, one can see that said chamber is arranged above the bundle of flue gas tubes 4 and in a central vertical position there is the burner 3 whose head 31 is generally coincident with the central axis of the combustion chamber 2.

The burner 3 of a known type is provided with a variable speed motor driving the fan connected to it at a speed and therefore with an air flow rate varying according to the required power.

Speed control is carried out with a conventional Hall effect sensor not shown in the drawings.

The burner has a known Venturi tube for mixing air with gas, in this case methane, so that the same air-gas mixture percentage is always kept even with air flow rates varying as a function of the burner speed.

The burner 3 has a head 31 having a diameter d at the flame outlet.

As above mentioned it is important that the flame may find inside the combustion chamber 2 space proportioned in such a way that the flame, when power is increased and the flame tends to detach from proximity of the burner head, may have a sufficiently wide space so that said flame never licks the surface 21 of the combustion chamber.

Therefore the invention provides for a ratio between the diameter D of the combustion chamber that in the illustrated example is circular, and the diameter d of the head 31 of the burner 3, is greater than or equal to 3.7.

Such a ratio between diameter of the combustion chamber and burner head warrants the optimal condition of the flame even with a modulation ratio 5 to 1, that is when the boiler power is reduced down to 20% of the maximum required power.

The effect of the correct measuring of the combustion chamber 2 relative to the high modulation required as power to be supplied by the boiler, warrants a perfect guide of the flame, which even undergoing variations of intensity and position relative to the burner head, always remains of the correct color which is an indication of the maximum flame temperature.

This requirement is essential in order that the flame does not produce as combustion products, gases with high contents of NOx or other undesirable gases at the flue gas outlet.

It is to be noted that the possibility of the boiler to deliver a variable power depends on the variation of the burner power and more particularly the variation of number of revolutions of the burner fan. As a matter of fact the power that can be supplied by the burner is proportional to the fan speed.

In order that the burner resists variations of the delivered power without undergoing quick deterioration, some expedients are provided such as to make the combustion head of a metal material in the form of interlaced metal fibers, where said metal fibers are an alloy of iron, chromium, aluminum, yttrium and zirconium. Such an alloy has a high resistance to temperature up to about 1050°C.

The modulation of the boiler power in addition to modulating the burner power, is also effected by varying the number of revolutions of the circulation pumps. This is shown in fig. 3 where one can see that the heating element 100 is connected at delivery with pipe 93 connected to the delivery pipe 90, and at return with pipe 112 connected to the second return fitting 11.

In order to keep the return temperature as low as possible, the circulation pump 13 is a variable speed pump.

This allows, when for instance the power required by the boiler is reduced, to lower the number of revolutions of the circulation pump 13 so that the return water supplied by the pipe 112 arrives at such a sufficiently low temperature as to always warrant the condensation phenomenon with consequent heat recovery from flue gases and therefore increase of the boiler overall efficiency.

The variable speed circulation pumps may of course be also associated to systems according to the scheme of fig. 2 or of any other system.

With the above mention expedient, that is with measuring the combustion chamber whose diameter warrants a ratio greater than or equal to 3.7 relative to the diameter of the burner head, and the burner 3 provided with a variable speed fan, modulation ratios greater than or equal to 5 are warranted.

The characteristic of a high modulation jointly with other features of the boiler such as the double return and the use of variable speed circulation devices, allows to increase the efficiency from 92% which is generally the efficiency of the traditional boilers to 100% which is the efficiency of the boiler of the invention. This efficiency would not be reached independently from the performance of the burner, if the boiler would not be provided with the features of the invention.

## Claims

1. A condensation boiler comprising:
- a combustion chamber (2) into which the head of at least a burner is inserted, the walls (21) of said combustion chamber being in contact with water to be heated;
- a plurality of flue gas tubes (4) adapted to convey the combustion gases to a gas outlet chimney (6);
- one or more water jackets (8) defined between said combustion chamber, said flue gas tubes and the outer surface of said boiler;
- a condensate collection chamber (5) arranged between said flue gas tubes (4) and said flue gas outlet chimney (6), **characterized in that** the ratio between the minimum dimension of said combustion chamber (2) and the diameter of said combustion head (31) is greater than or equal to 3.7.

2. The boiler according to claim 1) **characterized in that** said combustion chamber is generally cylindrical and the minimum dimension of said combustion chamber is the inner diameter of said cylindrical chamber.

3. The boiler according to claim 1) or 2) **characterized in that** said boiler has said combustion chamber (2) arranged with a vertical axis in the upper part of said boiler (1), the flue gas tubes (4) starting from the bottom of said combustion chamber (2) down to the condensate collection zone (5) at the bottom, and a flue gas outlet chimney (6) being vertically arranged in communication with said condensate collection zone.

4. The boiler according to claim 3) **characterized by** being associated to a burner (3) arranged on the upper part of said boiler having the flame outlet head (31) vertically arranged with an axis generally coincident with the axis of the combustion chamber.

5. The boiler according to claim 4) **characterized in that** said boiler has a variable speed fan associated to a Venturi type air-gas mixer, so as to keep the air-gar ratio generally constant when the flow rate of said mixture is varying.

6. The boiler according to claim 5) **characterized in that** the speed of said fan is controlled by a Hall effect sensor.

7. The boiler according to any of the preceding claims **characterized by** having a delivery fitting for water at the maximum required temperature to be associated to at least a delivery pipe, a first return fitting at intermediate temperature and a second return fitting at low temperature, each of said first and second return fitting being associated to at least a pipe coming from one or more heating elements.

8. The boiler according to claim 7) **characterized in that** said first return fitting is arranged at an intermediate position relative to the height of said boiler and said second return fitting is arranged near the bottom of said boiler.

9. The boiler according to any of the preceding claims **characterized by** being associated to one or more delivery pipes through variable speed circulation pumps.

10. The boiler according to any of the preceding claims **characterized by** having a ratio between maximum and minimum power greater than or equal to 5.
